# EUROPEAN PATENT APPLICATION

(11) **EP 2 033 765 A1**
(43) Date of publication of application: **11.03.2009**
(21) Application number: 07425552.2
(22) Date of filing: 07.09.2007
(51) Int. Cl.: B29C 53/60

(54) **Mandrel for providing a tubular article**

(71) Applicant: VEM S.p.A., 40033 Casalecchio di Reno (Bologna) (IT)
(72) Inventor: Ferri, Ugo, 20146 Milano (IT); Fratti, Giovanni, 33058 S. Giorgio di Nogaro (Udine) (IT)
(74) Representative: Alagem Modiano, Lara S.

(57) **Abstract**

A mandrel (1) for providing a tubular article, comprising a supporting structure (2) for the sliding guiding of a side wall (3) constituted by a plurality of plate-like elements (4) which can move according to a rule of motion which provides for a forward stroke and a return stroke. The elements (4) are guided in a translational motion by way of the presence of members (5) for the coupling and guiding of the elements (4) to the supporting structure (2). The mandrel (1) comprises a plurality of actuators (6) which are functionally associated with the plate-like elements (4) for the controlled translational motion, along the guided path, of the elements (4) according to presettable rules of motion.

## Description

The present invention relates to a mandrel for providing a tubular article.

The provision of tubular articles made of composite material is generally achieved by winding a plurality of structural fibers around a reference (which is fixed or movable) and by placing suitable resins intended to provide mutual consolidation of the fibers.

It should be noted that tubular articles, at the end of the formation process, may also undergo thermal treatments intended to polymerize (cross-link) the resins and therefore give the necessary structural rigidity to the entire article.

The Applicant is the proprietor of EP 138465 related to a mandrel which comprises a supporting structure on which a side wall is guided so that it can slide, said side wall being constituted by a plurality of plate-like elements, each of said elements being movable according to a rule of motion which provides for a forward stroke (advancement) and a return stroke (retraction). The elements are guided in their translational motion by rotating monolithically with the supporting structure by way of the presence of connecting means. The mandrel comprises a guiding cam, which is fixed and interacts with the tip of each element in order to cause said alternating rectilinear motion. In each complete cycle (one period of rotation of the cam) the number of elements that perform the forward stroke is greater than the number of elements that perform the return stroke. The shape of the guiding cam also forces the elements to be faster during their movement of the return stroke than during the forward stroke.

Such mandrel is substantially inaccurate in the management of the strokes (forward and return strokes) of the elements as regards possible plays between the cam and the surface of the element on which the cam acts. Accordingly, the return can be slower than desired, hindering the correct advancement of the article.

The aim of the present invention is to provide a mandrel for providing a tubular article in which the stroke of the plate-like elements is defined precisely in both directions.

Within this aim, an object of the present invention is to provide a mandrel for providing a tubular article in which the plate-like elements can move exactly at the chosen speed, very promptly, both during the forward (advancement) stroke and during the return (retraction) stroke.

Another object of the present invention is to provide a mandrel for providing a tubular article which has a low cost, is relatively simple to provide in practice and is safe in application.

This aim and this object, as well as others which will become better apparent hereinafter, are achieved by the present mandrel for providing a tubular article, which comprises a supporting structure for the sliding guiding of a side wall constituted by a plurality of plate-like elements which can move according to a rule of motion which provides for a forward stroke and a return stroke, the elements being guided in a translational motion by way of the presence of members for the coupling and guiding of said elements to the supporting structure, characterized in that it comprises a plurality of actuators which are functionally associated with said plate-like elements for the controlled translational motion, along said guided path, of said elements according to presettable rules of motion.

Further characteristics and advantages of the invention will become better apparent from the following detailed description of a preferred but non-exclusive embodiment of a mandrel for providing a tubular article, illustrated by way of non-limiting example in the accompanying drawings, wherein:

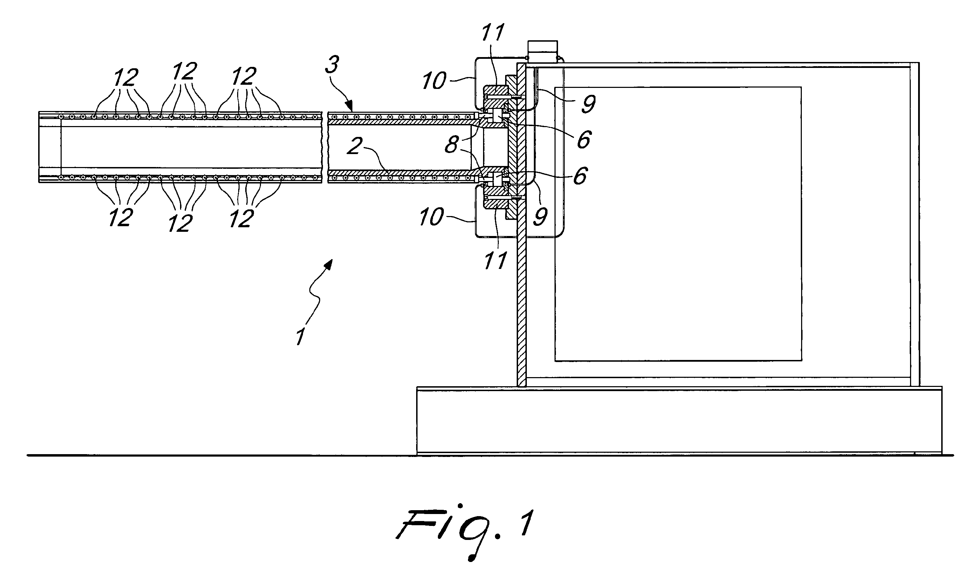

Figure 1 is a partially sectional side view, taken along a vertical longitudinal plane, of a mandrel according to the invention;

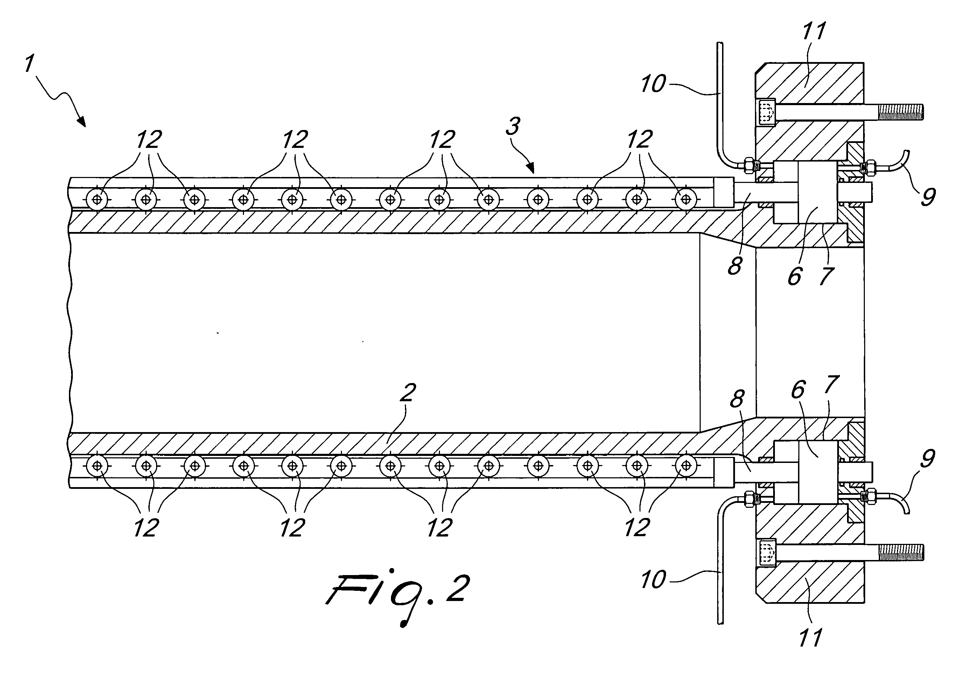

Figure 2 is an enlarged-scale sectional side view, taken along a vertical longitudinal plane, of a mandrel according to the invention;

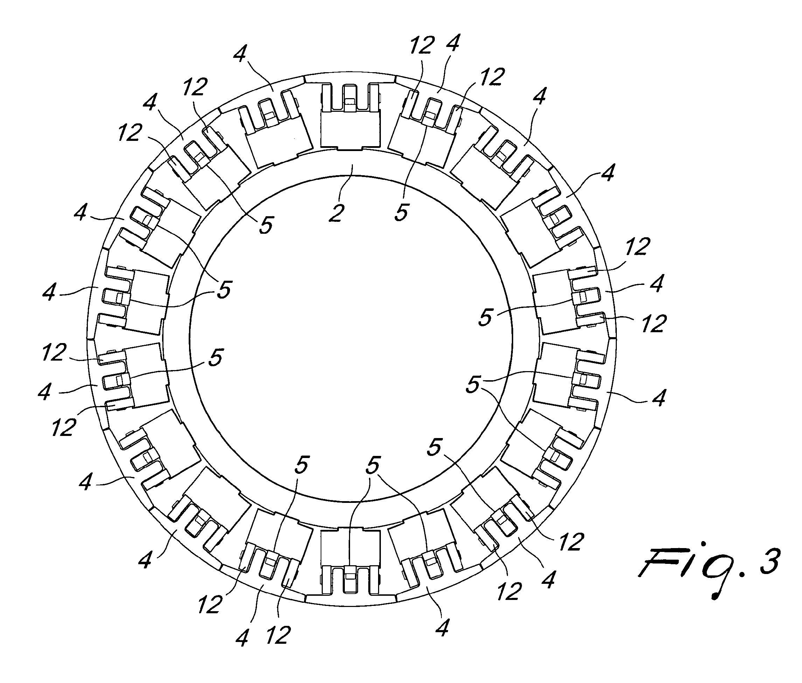

Figure 3 is an enlarged-scale front view of a mandrel according to the invention.

With reference to the figures, the reference numeral 1 generally designates a mandrel for providing a tubular article.

The mandrel 1 comprises a supporting structure 2 for the sliding guiding of a side wall 3, which is constituted by a plurality of plate-like elements 4 which can move according to a rule of motion which provides for a forward stroke and a return stroke.

The elements 4 are guided in their translational motion by way of the presence of members 5 for coupling and guiding with respect to the supporting structure 2.

The mandrel 1 further comprises a plurality of actuators 6, which are functionally associated with the plate-like elements 4 for the controlled translational motion along the guided path of the elements 4 according to suitable rules of motion which can be preset.

According to a particularly effective embodiment intended for extremely regular operation with any kind of rule of motion, a respective actuator 6 is associated with each plate-like element 4 and is designed to move it: in this manner, each actuator 6 can be moved independently of the contiguous ones, forcing an optimum advancement of the tubular article being formed. The embodiment shown in the figures provides for a one-to-one correspondence between the elements 4 and the actuators 6.

Each actuator 6 is powered by a suitable control and management unit according to operating cycles related to the rules of motion to be performed: in this manner, the unit can activate cyclically the actuators 6 depending on the step of the rule of motion (a rule of motion which is repeated according to similar successive cycles) in which they are, allowing correct advancement of the tubular article along the mandrel 1.

Indeed, by providing a rather slow advancement ramp (an advancement stroke which lasts distinctly longer than the half-cycle) and a swift return stroke (return stroke performed in a shorter time than the half-cycle), an overall advancement of the article along the mandrel 1 occurs; in particular, the elements for winding the fibers and the elements for distributing the resin, despite always facing the same area (or an otherwise limited region) of the mandrel 1, provide continuously new portions of the article being formed.

According to an embodiment of assured practical and application-related interest, each actuator 6 is constituted by a hydraulic cylinder which has a casing 7 which is fixed to the supporting structure 2 of the mandrel 1 (or is provided directly thereon) and has a piston 8 which is arranged so that its free end is coupled, even indirectly, to a respective plate-like element 4: in this manner, the feeding of oil from an upstream duct 9 entails the advancement of the piston 8 and therefore the advancement stroke of the element 4 associated therewith and the feeding of oil from a downstream duct 10 entails the retraction of the piston 8 with a corresponding retraction stroke of the element 4.

The presence of a plurality of hydraulic actuators 6 arranged radially, each in alignment with a corresponding element 4, ensures complete control of the rule of motion of each of the elements 4 simply by managing with appropriate calibrated valves the supply of oil through the ducts 9 and 10.

According to a first alternative embodiment, each actuator 6 can be a pneumatic cylinder whose casing is fixed to the supporting structure 2 of the mandrel 1 and whose piston has the free end mated, even indirectly, with at least one respective plate-like element 4. According to this embodiment, operation is substantially similar to the operation described for the embodiment with actuators 6 of the hydraulic type, but it is necessary to take care to vary the pressures of the gas within the upstream and downstream ducts with rather slow speed ramps in order to avoid snap actions on the part of the pneumatic actuator, with consequent differences in the movement of the element 4 associated therewith with respect to the respective rule of motion.

According to a second alternative embodiment, each actuator 6 is a linear induction motor: in this case, the inductor must be fixed to the supporting structure 2 of the mandrel 1 and the armature has the free end coupled even indirectly to at least one respective plate-like element 4. In this case, the movement of the motor is controlled by a suitable inverter assembly designed to control (in terms of torque, speed and position) the electrical values of the power supply of the motor.

According to a third alternative embodiment, each actuator 6 is a motor assembly which is connected to a worm-screw reduction unit. The motor is fixed to the supporting structure 2 of the mandrel 1 and a planetary gear, which performs a translational motion on the worm screw, is coupled, even indirectly, to at least one respective plate-like element 4. In this case also, it is necessary to control the motor with an appropriate assembly: if it is an electric motor, the control and management assembly is of the inverter type; in the case of a hydraulic motor it uses a valve assembly.

By viewing the accompanying figures, it can be seen that the supporting structure 2 is in any case substantially cylindrical and that a coupling flange 11 is associated with one of its ends; the actuators 6 are fitted on said flange with a radial distribution and parallel to the axis of the cylindrical supporting structure 2.

Suitable low-friction sliding assemblies are interposed between each plate-like element 4 and the outer surface of the supporting structure 2: said assemblies can be rolling elements 12 (rollers, wheels and the like) or, more simply, even blocks made of self-lubricating materials such as polytetrafluoroethylene (trade name Teflon) or such as some kind of polyamide (trade name Nylon).

The members 5 for mating and guiding the elements 4 to the supporting structure 2 comprise suitable interference couplings which are designed to prevent the separation of the elements 4 from the structure 2 along a radial direction. The elements 4 can be extracted substantially only in a direction which is parallel to the axis of the structure 2 when they are uncoupled with respect to the respective actuators 6.

The operation of the present invention is as follows. While a fiber dispenser and a resin distribution unit deposit the raw material that constitutes the composite tubular article onto the outer surface of the mandrel 1 (distribution over the entire surface achieved by turning the mandrel 1 or by turning the dispenser and distribution unit about it), the actuators 6 manage the movement of the plate-like elements 4.

Their movements are achieved according to rules of motion which provide for a slow advancement of the elements 4 toward the tip of the mandrel 1 and a rapid retraction toward the flange 11: the combination of the movement of all the elements 4, performed in order to keep the number of elements 4 that advance always higher than the number of the elements that retract, ensures a constant and continuous advancement of the article along the mandrel 1 in order to provide portions thereof substantially of any length.

It has thus been shown that the invention achieves the intended aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A mandrel for providing a tubular article, which comprises a supporting structure (2) for the sliding guiding of a side wall (3) constituted by a plurality of plate-like elements (4) which can move according to a rule of motion which provides for a forward stroke and a return stroke, said elements (4) being guided in a translational motion by way of the presence of members (5) for the coupling and guiding of said elements (4) to the supporting structure (2), **characterized in that** it comprises a plurality of actuators (6) which are functionally associated with said plate-like elements (4) for the controlled translational motion, along said guided path, of said elements (4) according to presettable rules of motion.

2. The mandrel according to claim 1, **characterized in that** a respective actuator (6) is associated with each of said plate-like elements (4) and is designed to move it.

3. The mandrel according to claim 1, **characterized in that** each of said actuators (6) is powered by a control and management unit according to operating cycles which are related to said rules of motion.

4. The mandrel according to the preceding claims, **characterized in that** each of said actuators (6) is a hydraulic cylinder in which the casing (7) is fixed to the supporting structure (2) of said mandrel (1) and has a piston (8) in which the free end is coupled, even indirectly, to at least one respective plate-like element (4).

5. The mandrel according to claims 1 to 3, **characterized in that** each of said actuators (6) is a pneumatic cylinder in which the casing is fixed to the supporting structure (2) of said mandrel (1) and has a piston in which the free end is coupled, even indirectly, to at least one respective plate-like element (4).

6. The mandrel according to claims 1 to 3, **characterized in that** each of said actuators (6) is a linear induction motor, the inductor being fixed to the supporting structure (2) of said mandrel (1) and the armature having its free end coupled, at least indirectly, to at least one respective plate-like element (4).

7. The mandrel according to claims 1 to 3, **characterized in that** each of said actuators (6) is a motor assembly, which is connected to a worm-screw reduction unit, the motor being fixed to the supporting structure (2) of said mandrel (1) and a planetary gear which performs a translational motion on said worm screw being coupled, at least indirectly, to at least one respective plate-like element (4).

8. The mandrel according to one or more of the preceding claims, **characterized in that** said supporting structure (2) is substantially cylindrical and associated, at one of its ends, with a coupling flange (11) on which said actuators (6) are inserted with a radial distribution and so that they are parallel to the axis of the cylindrical supporting structure (2).

9. The mandrel according to one or more of the preceding claims, **characterized in that** low-friction sliding assemblies (12) are interposed between each of said plate-like elements (4) and the outer surface of said supporting structure (2).

10. The mandrel according to one or more of the preceding claims, **characterized in that** the members (5) for coupling and guiding said elements (4) with respect to the supporting structure (2) comprise interference couplings which are designed to prevent the separation of the elements (4) from the structure (2) along the radial direction, said elements (4) being substantially extractable only in a direction which is parallel to the axis of said structure (2) when they are uncoupled from said actuators (6).
